# EUROPEAN PATENT SPECIFICATION

(11) **EP 3 722 257 B1**
(45) Date of publication and mention of the grant of the patent: **10.06.2026**
(21) Application number: 18859950.0
(22) Date of filing: 04.12.2018
(51) Int. Cl.: C01B 3/38, B01J 12/00, B01J 19/00, B01J 8/02, B01J 19/02, B01J 8/04

(54) **APPARATUS AND METHOD FOR PRODUCING HYDROGEN-CONTAINING GAS**
VORRICHTUNG UND VERFAHREN ZUR HERSTELLUNG VON WASSERSTOFFHALTIGEM GAS
APPAREIL ET PROCÉDÉ DE PRODUCTION DE GAZ HYDROGÉNÉ

(30) Priority: 07.12.2017 RU 2017142884
(43) Date of publication of application: 14.10.2020
(73) Proprietor: Publichnoe Aktsionernoe Obschestvo "Gazprom", Moscow 117997 (RU)
(72) Inventor: AKSIUTIN, Oleg Yevgenievich, Moscow 119415 (RU); ISHKOV, Aleksandr Gavrilovich, Moscow 117437 (RU); HLOPCOV, Valerii Gennadievich, Moscow 109117 (RU); KAZARYAN, Varazdat Amayakovich, Moscow 119602 (RU); STOLYAREVSKII, Anatolii Yakovlevich, Moscow 123098 (RU)
(74) Representative: Danubia Patent & Law Office LLC
(86) International application number: PCT/RU2018/000782
(87) International publication number: WO 2019/112480

(56) References cited:
- CN-A- 1 092 037
- US-A1- 2006 029 539
- US-A1- 2006 143 980
- US-A1- 2008 275 143
- US-A1- 2010 221 157

## Description

This invention relates to an apparatus and a method for obtaining hydrogen-bearing gas, hydrogen, hydrogen-methane mixture, syngas containing substantially H₂ and CO for producing hydrogen, alcohols, ammonia, dimethyl ether, ethylene, for Fischer-Tropsch processes and may be used in chemical industry for the processing of hydrocarbon gases and also in technologies involving the application of hydrogen-methane mixture.

The prior art describes a methane conversion reactor for obtaining syngas containing substantially H₂ and CO for producing alcohols, ammonia, dimethyl ether, ethylene, for Fischer-Tropsch processes, described in RF patent No. 2228901 published on 2004.05.20, IPC C01B3/38. The prior-art reactor for obtaining syngas with preset H₂/CO ratio within the range from 1.0 to 2.0 comprises two stages: partial oxidation step A) and step B) of converting residual methane with step A) products on a catalyst. The partial oxidation step A) is performed in two stages: a) non-catalytic partial oxidation of natural gas with oxygen to obtain products with non-equilibrium content of H₂O and CH₄ at approximate mole ratio of oxygen and methane equal to 0.76-0.84; b) conversion of stage a) reaction products with corrective additives of CO₂ and H₂O or H₂0 and CH₄ to obtaining a gas mixture subjected to conversion of residual methane with water vapor on a catalyst. Methane conversion reactor allows producing syngas with preset CO/H₂ ratio, which may be used for obtaining hydrogen and also feed stock for further synthesis processes of alcohols, dimethyl ether, ammonia or other basic chemicals.

However, the described methane conversion reactor has several disadvantages, among which are functional and economic limitations for apparatus application connected with high oxygen consumption (exceeding consumption of converted natural gas in weight), production of which requires high power consumption (up to 1000 kWh/t) and capital cost (up to 1500 USD/kgh⁻¹). Sooting is also a serious problem, as it significantly reduces catalyst activity.

Among disadvantages of the apparatus are also low thermodynamic efficiency due to expenditures for air compression, presence of intermediate stages and side reactions, which significantly reduce content of target components in product gas.

The prior art describes a reactor for obtaining hydrogen-methane mixture, described in Invention Patent RU No. 2520482 published on 27.06.2014. It is an equivalent apparatus using at least two concurrent flows comprising lower paraffin hydrocarbons as a feedstock source. At that, one flow is fed for partial oxidation with oxygen-containing gas and the other flow is mixed with water vapor and passes several succeeding stages. Each of the stages consists of heating in heating heat exchanger due to heat transfer from partial oxidation of the first flow. After that the flow passes through adiabatic conversion reactor filled with catalyst head. Disadvantages of this solution are high capital costs, high metal consumption and low efficiency of feed stock utilization.

The prior art describes an invention under USSR Patent No. 1831468, IPC 5 C01B 3/38 "Method for obtaining syngas from hydrocarbon feed". It is an equivalent method which includes mixing hydrocarbon feed with oxidizer - oxygen or oxygen-containing gas or vapor and converting the mixture in the presence of a monolithic catalyst. At that temperature in reaction zone is not less than 93°C lower than mixture self-ignition point and mixture injection rate in reaction zone exceeds the speed of flashback process. The prior art method requires using a high-selectivity catalyst. The main disadvantages of the invention described in USSR Patent No. 1831468 are high catalyst cost, possible catalyst damage due to local overheating and possible sooting.

The prior art describes a similar invention in published US patent application 2006/0143980 A1 " REACTOR AND PROCESS FOR MAKING SYNTHESIS GAS" published on 06.07.2006. Said US patent application discloses an apparatus and a process for the production of syngas from a feed stream comprising a hydrocarbon containing gas and an oxygen containing gas, preferrably with very low or no steam content.

A disadvantage of this solution is that increasing the temperature of the feedstream by means of ex-situ preheating results in having a combustible gas close to auto-ignition conditions well before the feedstream reaches the catalyst. Therefore, the reactor of the invention is designed to heat in situ the feedstream in very close proximity to the CPOX (catalytic partial oxidation) reaction zone disposed in said reactor.

Currently a reactor for partial methane oxidation is known. It includes:
- first chamber for forming passage for first reactant gas;
- second chamber for forming passage for second reactant gas;
- porous catalytic membrane separating first and second chambers. This membrane may allow second reactant gas (e.g., oxygen) to pass
from the second chamber into the first chamber. The reactor is used to obtain syngas with H₂/CO ratio from approximately 1.8:1 to approximately 6:1 due to conversion of natural gas or coal bed methane or biogas. The reactor has refractory lining with thickness of approximately 25-200 mm, which can withstand temperatures up to approximately 1000°C (US application for invention No. 20130032762 published on June 02, 2013) - analogue. Disadvantages of this invention are necessity to use membrane, which reduces reactor reliability and output, and difficulties in adjusting H₂/CO ratio.

Promising direction in methane conversion is two-stage process of «deep oxidation of CH₄ + non-catalytic carbon dioxide conversion». It allows implementing autothermal process due to combined approach when exothermic stage of full oxidation of methane is combined with endothermic stage of carbon dioxide conversion. Such approach is implemented in reactor for methane conversion with H₂/CO including combustion chamber for methane or natural gas with air oxygen; mixer; cooling system for oxidation products and syngas; preheating system for methane and air. At that, combustion chamber contains ignition apparatus and made in the form of flow chamber. Mixer with anti-breakthrough grid is attached to chamber inlet and methane and air supply pipes are attached to the mixer. Heat exchanger for cooling oxidation products and heating the air supplied to combustion chamber is attached to chamber outlet. At that, heat exchanger has nipple to vent oxidation products from its cavity. The apparatus also has carbon dioxide extraction system; mixer for carbon dioxide and methane and chamber for carbon dioxide conversion installed in combustion chamber (patent of the Russian Federation No. 2361809 published on 20.07.2009 Bulletin No. 20 - analogue). Disadvantages of this solution are: apparatus complexity, high thermodynamic losses and high metal consumption.

Currently a methane conversion reactor for obtaining hydrogen- and carbon oxide-rich gas is known. It includes jacket, which operates under pressure and has devices for supply of water vapor containing the flow of hot gases and for output of product; refractory lining on inner wall of jacket and layer of reforming catalyst located inside it and also jet nozzle to produce water vapor containing the flow of hot gases. The jet nozzle is connected with upper part of casing, which operates under pressure. Distinctive feature of the reactor per this invention is that catalyst layer consists of upper and lower sublayers. At that, upper sublayer of catalyst has lower catalytic activity than that of lower sublayer (patent No. 2119382, published on 27.09.1998) - analogue. Disadvantages of this technical solution are low efficiency of lower paraffin hydrocarbons conversion, low thermodynamic efficiency of this method, high capital costs and metal consumption and high content of impurity gases (nitrogen, argon) in product gas.

Currently a methane conversion reactor for obtaining hydrogen- and carbon oxide-rich gas is known (patent No. 2571149, published on 20.12.2015). It is a prototype including casing, which operates under pressure and has devices for supply of water vapor, methane and oxygen-containing gas and for output of product; refractory lining on inner wall of casing and layer of methane conversion catalyst located inside it. It consists of upper and lower sublayers. Between catalyst sublayers there is a apparatus for supply of active gas, which is carbon dioxide.

The apparatus allows increasing carbon oxide content for synthetic processes. However, this apparatus does not allow increasing hydrogen content.

Technical results of claimed invention is the increase of efficiency of lower paraffin hydrocarbons conversion and the thermodynamic efficiency of methane conversion reactor, as well as the increase of H₂/CO ratio in product gas.

In one aspect, the above technical results are achieved by the apparatus for obtaining hydrogen-bearing gas as set forth in claim 1.

In a further aspect, the above technical results are achieved by the method for obtaining hydrogen-bearing gas in accordance with claim 2.

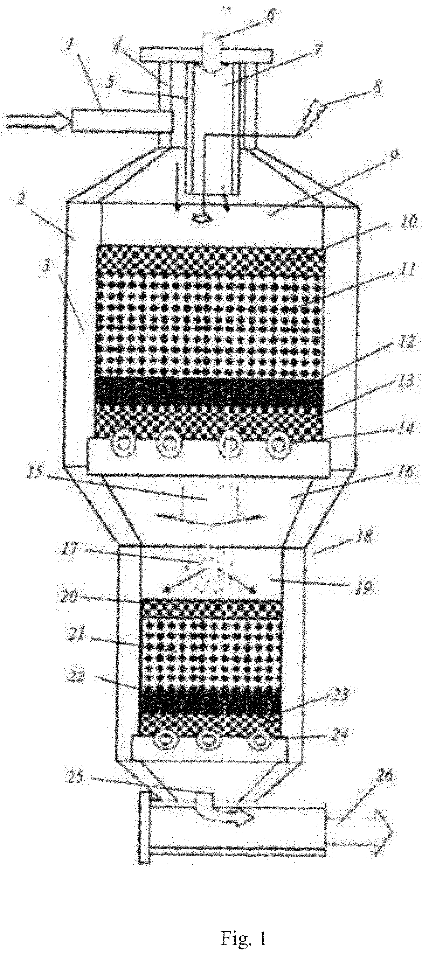

The figure shows structural diagram of the apparatus, wherein the meaning of the reference numerals is as follows: 1 - duct for supply of mixture of steam and methane; 2 - upper casing of reactor; 3 - lining; 4 - mixer casing; 5 - tubular annulus of coaxial mixer; 6 - duct for supply of mixture of steam and air; 7 - center tube; 8 - ignition supply; 9 - methane oxidation chamber; 10, 20 - protective spheres; 11, 21 - catalyst sublayer; 12, 22 - fire brick arch; 13, 23 - support spheres; 14, 24 - support grid; 15 - chemicals flow; 16 - communicating chamber; 17 - duct for supply of methane; 18 - lower casing of reactor; 19 - mixing chamber; 25 - outlet pipe; 26 - outlet of product gas.

An exemplary embodiment of the invention is the apparatus for obtaining hydrogen-bearing gas described below. In the described exemplary embodiment of the invention air is used as oxygen-containing gas. This allows characterizing the features of the embodiment of the invention with regard to systems for processing natural gas and associated gases and obtaining product gas with required composition.

The apparatus for obtaining hydrogen-bearing gas includes an upper casing 2 of a reactor; a lining 3 on inner wall of the reactor casing 2; a coaxial mixer 4 with a mixer casing; a duct 1 for supply of mixture of steam and methane supplied to a tubular annulus 5 of the coaxial mixer; a duct 6 for supply of mixture of steam and air supplied to a center tube 7; an ignition supply 8 to igniter (not shown in the figure) located on a lower edge of the center tube 7. The center tube enters a methane oxidation chamber 9, a lower level of which is formed by protective spheres 10. The spheres protect an upper layer 11 of catalyst from overheating. Under the upper layer 11 of catalyst, a fire brick arch 12 and a layer of support spheres 13 are located resting on a support grid 14. A chemicals flow 15 passes through the grid to a duct 17 for supply of methane. The duct is located in a lower casing 18 of the reactor together with a mixing chamber 19 that communicates through a communicating chamber 16 with an upper casing of the reactor. The lower casing of the reactor includes a layer of protective spheres 20; a lower sublayer 21 of catalyst, under which a fire brick arch 22 and a layer of support spheres 23 are located resting on a support grid 24. The grid is located over an outlet pipe 25 connected with an outlet 26 of product gas.

Methane inlet is in the form of a perforated cylinder with the solid bottom connected with a nipple on an outer wall of the lower casing 18 of the reactor. The duct 17 for supply of methane is connected with a heat exchanger (not shown in the figure) along the heated side. The outlet 26 of product gas is connected with a heat exchanger (not shown in the figure) along the heating side.

The lower sublayer 11 of catalyst for methane conversion and also the upper sublayer 21 of catalyst rest on the fire brick arch 12, 22 and the layer of corundum support spheres 13, 23 located on the lower and upper support grids 14, 24, respectively. The grids are installed in the upper casing 2 and the lower casing 18 of the reactor on lugs of the refractory lining 3 (not shown in the figure). A main component of material for the refractory lining is aluminum oxide with the content of Fe₂O₃ not more than 0.2%. The support spheres 13, 23 and the spheres 10, 20 are also made of aluminum oxide.

The methane inlet is formed in such a way that it allows maintaining the methane content upstream the lower sublayer 21 of catalyst within the range from 0.1 to 0.25 of volume content of water vapor.

The apparatus for obtaining hydrogen-bearing gas operates as follows.

In the described exemplary embodiment of the invention natural gas-methane is used as the lower paraffin hydrocarbon, which allows characterizing the features of the embodiment of invention in terms of processing natural gas and associated gases to methane-hydrogen mixture.

A flow of natural gas with a pressure of 1.0 MPa is subjected to desulphurization (if sulfur compounds are contained in the natural gas as impurities) expressed as sulfur up to mass concentration of sulfur less than 0.5 mg/nm³, heating in heat exchanger and mixing with overheated water vapor. Then through the duct 1 for supply of mixture of steam and methane the flow is supplied to the coaxial mixer 4 with the mixer casing installed on the upper casing 2 of the reactor and supplied to the tubular annulus 5 of the coaxial mixer. Compressed air with a pressure of 1.0 MPa is heated up to 400°C, mixed with overheated water vapor and then through the duct 6 for supply of mixture of steam and air is supplied to the center tube 7. In the lower part of the pipe in a free space over the upper sublayer 11 of catalyst, a combustion reaction of methane and air takes place in the presence of water vapor using the ignition supply 8 to the igniter (not shown in the figure) located on the lower edge of center tube 7. As a result of this reaction, heat is obtained necessary to carry out a reaction of adiabatic methane conversion on catalyst 11. From the upper sublayer 11 of the catalyst flow of chemicals 15 is supplied to the mixing chamber 19 for mixing with an additional volume of methane. Mixing takes place in a free space between the upper casing 2 and the lower casing 18 of the reactor. Methane is supplied, when methane is heated up to 400°C in the heat exchanger (not shown in the figure).

Methane is supplied provided that the methane content upstream the lower sublayer 21 of catalyst is within the range from 0.1 to 0.25 of volume content of water vapor. When steam/gas ratio exceeds 0.25, process efficiency decreases and capital costs increase. This is due to either the necessity of an increase in the recirculation flow of gases resulting from low degree of conversion at the temperature of the flow heating temperature specified below, or the necessity of an increase in the heating temperature upstream the upper sublayer 11 of catalyst above 1000-1200°C, which will require the usage of more expensive materials for the reactor. A decrease of methane/water vapor ratio below 0.1 will also result in a decrease of the process efficiency due to a necessity of producing excess water vapor.

Mixed flow of chemicals and methane is supplied to lower sublayer 21 of methane conversion catalyst of adiabatic reactor filled with nickel catalyst and intended for additional reaction of methane conversion due to sensible heat of gas mixture of chemicals flow 15. The outlet 26 of product gas is connected along the heating side with heat exchanger (not shown in the figure) in such a way that heated product gas may cool due to heating of inlet flows of methane and compressed gas and also to obtain overheated water vapor. After cooling product gas containing methane-hydrogen mixture is supplied for use as fuel or reaction mixture. Before supply to customer carbon dioxide may be removed from product gas. Carbon dioxide may be used as market product or buried in accordance with Paris Agreement. In the latter the technology is free from greenhouse gas emissions.

The following may be used as methane conversion catalyst: granular layer of corundum Raschig rings or spheres containing nickel, ruthenium, rhodium, palladium and iridium applied to refractory oxides such as cordierite, mullite, chrome oxide, aluminum titanate, spinel, zirconium dioxide and aluminum oxide.

Temperature in the lower sublayer 21 of catalyst of adiabatic reactor is maintained in the range within from approximately 500°C to 700°C to increase process efficiency. The head of the lower sublayer 21 of catalyst contains as active component the metal chosen from the following: rhodium, nickel, platinum, iridium, palladium, iron, cobalt, rhenium, ruthenium, copper, zinc, their mixtures or compounds. Johnson Matthey KATALCO 25-4Q and KATALCO 57-4Q catalysts may be used. Catalyst NIAP-03-01 is also effective. Catalyst composition with variable content of platinoids and also metals affecting kinetics of carbon oxide oxidation by water vapor (shift reaction) allows controlling hydrogen content in end product.

Pressure of flows is chosen within the range from 0.1 to 9.0 MPa, which allows reducing devices dimensions, reducing gas-dynamic losses and expenditures connected with compression.

Table 1 shows calculation of process in adiabatic reactor.

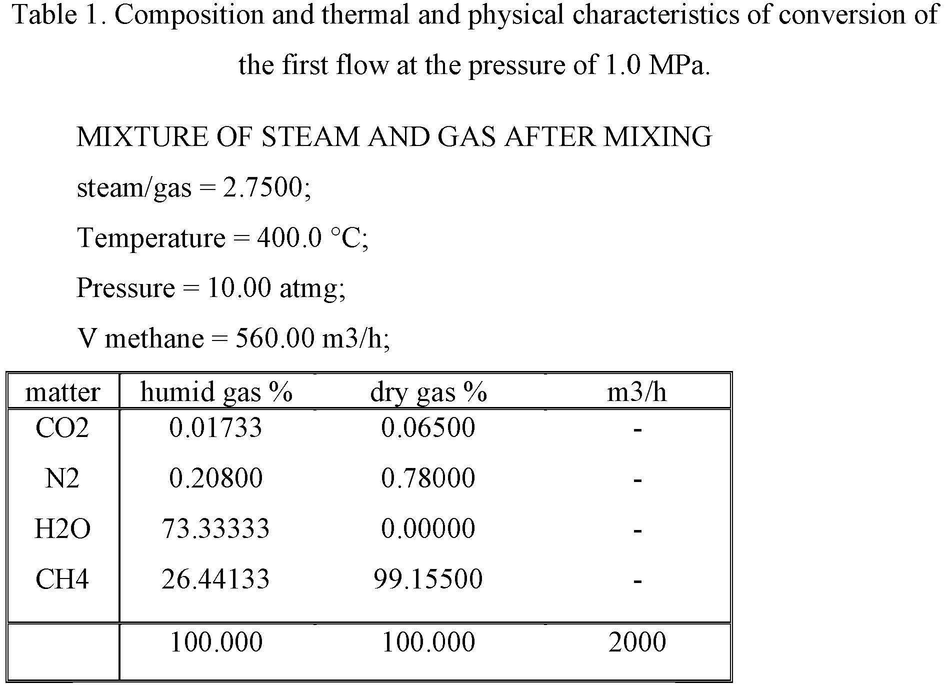

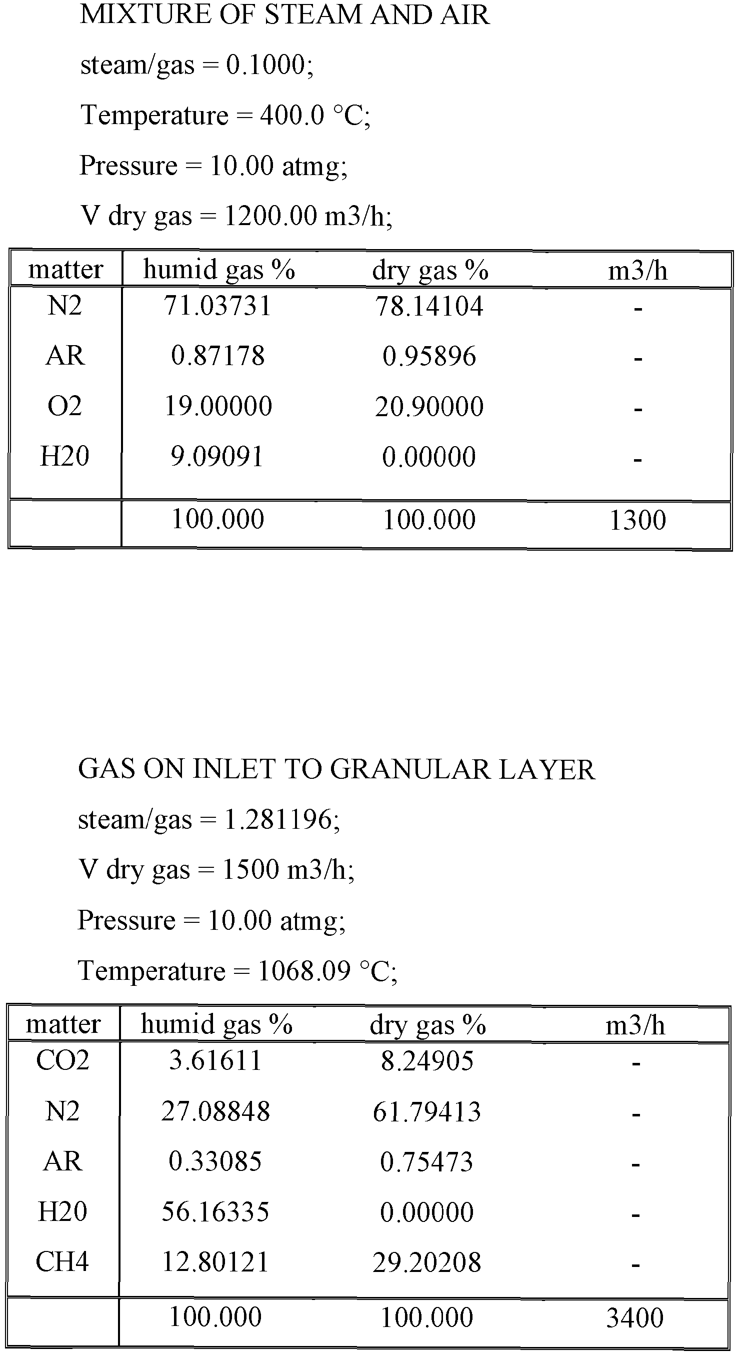

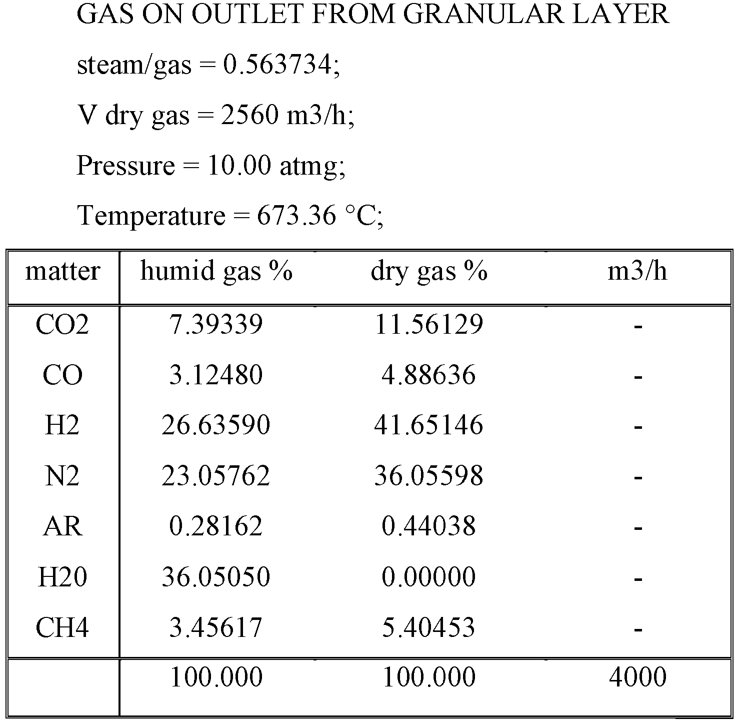

Thus, the proposed invention is a new apparatus, which allows to increase the efficiency of lower paraffin hydrocarbons conversion and the thermodynamic efficiency of methane conversion reactor, to decrease capital costs and metal consumption, to decrease impurity gases (nitrogen, argon) content and to increase the H₂/CO ratio in product gas.

Produced products - hydrogen-bearing gas and its derivatives (hydrogen, methane-hydrogen mixture) can then be used in gas and gas chemical industry and metallurgy for hydrocarbons processing and also in energy accumulation and transmission systems and as fuel for transport and stationary electric power plants.

Thus, the proposed invention is a new apparatus, which allows increasing efficiency of methane conversion and thermodynamic efficiency of methane conversion reactor, decreasing capital costs and metal consumption, decreasing content of impurity gases (nitrogen, argon) and increasing H₂/CO ratio in product gas.

Produced products - hydrogen-bearing gas and its derivatives (hydrogen, methane-hydrogen mixture) may then be used in gas and gas chemical industry and metallurgy for hydrocarbons processing and also in energy accumulation and transmission systems and as fuel for transport and stationary electric power plants.

## Claims

1. An apparatus for obtaining hydrogen-bearing gas, comprising an upper casing of a reactor with an oxidation chamber (2) and a lower casing of a reactor (18) with a mixing chamber (25) communicating through a communicating chamber (16) covered with lining on inner walls (3), a coaxial mixer (4) and a center tube (7) forming a tubular annulus of the coaxial mixer (5), a duct for supply of a mixture of steam and methane (1), wherein the mixture of steam and methane is supplied to a tubular annulus of the coaxial mixer (5), a duct for supply of a mixture of steam and air, wherein the mixture of steam and air is supplied to the center tube (7), an ignition supply (8) to an igniter located on the lower edge of the center tube (7), which enters the inner space of the upper casing (2), a methane supply duct (17) in the lower casing (18), an outlet pipe (25) in the lower part of the lower casing connected with a product gas outlet (26), wherein the casing of each reactor comprises consecutive layers of protective spheres (10, 20), catalyst (11, 21), fire brick arch (12, 22; and support spheres (13, 23) resting on a support grid (14, 24), the catalyst resting on the fire brick arch (12, 22) comprising gas ports, which are covered by corundum support spheres (13, 23) preventing catalyst spillage and decreasing resistance for gas to pass through the arch.

2. A method for obtaining hydrogen-bearing gas consisting in a supply of a steam-methane mixture to a tubular annulus of a coaxial mixer (1) installed on an upper casing of a reactor (2), a supply of a steam-air mixture to a center tube (7) and also a supply of ignition (8) to an ignitor, to a methane oxidation chamber (9) in an upper casing of the reactor (2), where a methane combustion reaction takes place over an upper sublayer of a catalyst (11), whereby a flow of chemicals resulting from this reaction is fed for mixing with an additional amount of methane, wherein the mixing takes place in a free space between the upper and a lower casing of the reactor (18), methane being fed with the methane content upstream of the lower sublayer of a catalyst (21) of the lower casing of the reactor (18) kept within the range from 0.1 to 0.25 of volume content of methane in relation to steam in the flow of mixed chemicals and methane, wherein the flow of mixed chemicals and methane is supplied to the lower sublayer of a catalyst (21) for methane conversion in the lower casing of the reactor (18), where additional methane conversion reaction takes place due to sensible heat of gas mixture in chemicals flow, and the product gas is discharged through an outlet pipe.

## Patentansprüche

1. Vorrichtung zur Gewinnung von wasserstoffhaltigem Gas, umfassend ein oberes Gehäuse eines Reaktors mit einer Oxidationskammer (2) und ein unteres Gehäuse eines Reaktors (18) mit einer Mischkammer (25), die über eine Verbindungskammer (16) in Verbindung stehen, wobei die Verbindungskammer (16) an den Innenwänden (3) mit einer Auskleidung versehen ist, einen Koaxialmischer (4) und ein Zentralrohr (7), das einen rohrförmigen Ringraum des Koaxialmischers (5) bildet, einen Kanal für die Zufuhr eines Gemisches aus Dampf und Methan (1), wobei das Gemisch aus Dampf und Methan in das rohrförmigen Ringraum des Koaxialmischers (5) zugeführt wird, eine Leitung zur Zufuhr eines Gemisches aus Dampf und Luft, wobei das Gemisch aus Dampf und Luft in das Mittelrohr (7) zugeführt wird, eine Zündzufuhr (8) zu einem Zünder, der sich am unteren Rand des Mittelrohrs (7) befindet, das in den Innenraum des oberen Gehäuses (2) mündet, eine Methanzufuhrleitung (17) im unteren Gehäuse (18), ein Auslassrohr (25) im unteren Teil des unteren Gehäuses, das mit einem Produktgasauslass (26) verbunden ist, wobei das Gehäuse jedes einzelnen Reaktors aufeinanderfolgende Schichten aus Schutzkugeln (10, 20), Katalysator (11, 21), Feuerfeststeinbögen (12, 22) und Stützkugeln (13, 23) umfasst, die auf einem Stützgitter (14, 24) aufliegen, wobei der auf dem Feuerfeststeinbogen (12, 22) aufliegende Katalysator Gasöffnungen aufweist, die von Korund-Stützkugeln (13, 23) abgedeckt sind, um ein Austreten des Katalysators zu verhindern und den Widerstand für den Gasdurchfluss durch den Bogen zu verringern.

2. Verfahren zur Gewinnung von wasserstoffhaltigem Gas, bestehend aus der Zufuhr eines Dampf-Methan-Gemisches in einen ringförmigen Zwischenraum eines koaxialen Mischers (1), der an einem oberen Gehäuse eines Reaktors (2) angebracht ist, der Zufuhr eines Dampf-LuftGemisches in ein Zentralrohr (7) sowie der Zufuhr einer Zündung (8) zu einem Zünder, zu einer Methan-Oxidationskammer (9) in einem oberen Gehäuse des Reaktors (2), wo eine Methanverbrennungsreaktion über einer oberen Unterschicht eines Katalysators (11) stattfindet, wodurch ein aus dieser Reaktion resultierender Chemikalienstrom zur Vermischung mit einer zusätzlichen Menge Methan zugeführt wird, wobei die Vermischung in einem Freiraum zwischen dem oberen und einem unteren Gehäuse des Reaktors (18) stattfindet, wobei das Methan mit einem Methangehalt stromaufwärts der unteren Schicht eines Katalysators (21) des unteren Gehäuses (18) des Reaktors zugeführt wird, der im Bereich von 0,1 bis 0,25 des Volumenanteils von Methan im Verhältnis zu Dampf im Strom aus gemischten Chemikalien und Methan gehalten wird, wobei der Strom aus gemischten Chemikalien und Methan der unteren Schicht eines Katalysators (21) zur Methanumwandlung im unteren Gehäuse des Reaktors (18) geleitet wird, wo aufgrund der fühlbaren Wärme des Gasgemischs im Chemikalienstrom eine zusätzliche Methanumwandlungsreaktion stattfindet, und das Produktgas durch ein Auslassrohr abgeleitet wird.

## Revendications

1. Appareil destiné à obtenir un gaz contenant de l'hydrogène, comprenant une enveloppe supérieure d'un réacteur avec une chambre d'oxydation (2) et une enveloppe inférieure d'un réacteur (18) avec une chambre de mélange (25) communiquant par l'intermédiaire d'une chambre de communication (16) recouverte d'un revêtement sur les parois internes (3), un mélangeur coaxial (4) et un tube central (7) formant un espace annulaire tubulaire du mélangeur coaxial (5), un conduit d'alimentation en mélange de vapeur et de méthane (1), dans lequel le mélange de vapeur et de méthane est acheminé vers l'espace annulaire tubulaire du mélangeur coaxial (5), un conduit d'alimentation en mélange de vapeur et d'air, dans lequel le mélange de vapeur et d'air est acheminé vers le tube central (7), une alimentation d'allumage (8) vers un allumeur situé sur le bord inférieur du tube central (7), qui pénètre dans l'espace intérieur de l'enveloppe supérieure (2), un conduit d'alimentation en méthane (17) dans l'enveloppe inférieure (18), un tuyau de sortie (25) dans la partie inférieure de l'enveloppe inférieure relié à une sortie de gaz produit (26), dans lequel l'enveloppe de chaque réacteur comprend des couches successives de sphères de protection (10, 20), de catalyseur (11, 21), d'une voûte en briques réfractaires (12, 22) et de sphères de support (13, 23) reposant sur une grille de support (14, 24), le catalyseur reposant sur la voûte en briques réfractaires (12, 22) comprenant des orifices de passage de gaz, qui sont recouverts par des sphères de support en corindon (13, 23) empêchant le déversement du catalyseur et réduisant la résistance au passage du gaz à travers la voûte.

2. Procédé pour obtenir un gaz contenant de l'hydrogène, consistant à acheminer un mélange vapeur-méthane vers un espace annulaire tubulaire d'un mélangeur coaxial (1) installé sur une enveloppe supérieure d'un réacteur (2), à acheminer un mélange vapeur-air vers un tube central (7) ainsi qu'à acheminer un flux d'allumage (8) vers un allumeur, vers une chambre d'oxydation du méthane (9) située dans une enveloppe supérieure du réacteur (2), où une réaction de combustion du méthane a lieu sur une sous-couche supérieure d'un catalyseur (11), de sorte qu'un flux de produits chimiques résultant de cette réaction est introduit pour être mélangé à une quantité supplémentaire de méthane, le mélange ayant lieu dans un espace libre entre les enveloppes supérieure et inférieure du réacteur (18), le méthane étant introduit avec une teneur en méthane en amont de la sous-couche inférieure d'un catalyseur (21) de l'enveloppe inférieure (18) du réacteur, maintenue dans la plage de 0,1 à 0,25 en volume de méthane par rapport à la vapeur dans le flux de produits chimiques et de méthane mélangés, le flux de produits chimiques et de méthane mélangés étant acheminé vers la sous-couche inférieure d'un catalyseur (21) pour la conversion du méthane dans l'enveloppe inférieure du réacteur (18), où une réaction supplémentaire de conversion du méthane a lieu sous l'effet de la chaleur sensible du mélange gazeux dans le flux de produits chimiques, et le gaz produit est évacué par un tuyau de sortie.
